Europäisches Patentamt

European Patent Office

Office européen des brevets

(11) Numéro de publication: **0 404 708**
**A1**

## (12) DEMANDE DE BREVET EUROPEEN

(21) Numéro de dépôt: **90480084.4**

(22) Date de dépôt: **12.06.90**

(51) Int. Cl.⁵: **B60B 25/22, B21D 53/30, B60B 3/06**

(30) Priorité: **19.06.89 FR 8908571**

(43) Date de publication de la demande:
**27.12.90 Bulletin 90/52**

(84) Etats contractants désignés:
**DE GB IT**

(71) Demandeur: **Gigoux, Michel**
**Villa 4, 216 route de Bellet**
**F-6200 Nice(FR)**

(72) Inventeur: **Gigoux, Michel**
**Villa 4, 216 route de Bellet**
**F-6200 Nice(FR)**

(54) **Procédé de fabrication de roues en trois parties utilisant des profils extrudés comportant chacun une aile qui formeront roulées une couronne circonférentielle recevant le voile.**

(57) L'invention concerne un procédé de fabrication de roues en alliage léger composées de trois parties :les deux demi-jantes 3 issues de deux segments droits de profils extrudés comportant une aile qui formeront ,lorsque les segments droits seront roulés , une couronne circonférentielle 18 sur laquelle viendra s'appuyer le voile 2 et plus particulièrement le bord annulaire 4 pour être assemblé a la jante par boulonnage.
Ce procédé et les roues issues de celui-ci sont notamment destinés à l'industrie automobile.

Fig.6

EP 0 404 708 A1

## PROCEDE DE FABRICATION DE ROUES EN TROIS PARTIES UTILISANT DEUX PROFILS EXTRUDES

Actuellement la technologie de fabrication de roues en trois parties en alliage léger a donné la priorité à la production de demi-jantes obtenues par repoussage et assemblées entre elles par boulonnage ou soudage pour être ensuite reliées au moyeu par boulonnage ou soudage.

Ce procédé des roues en alliage léger composées de trois parties assemblées par boulonnage ou soudage , s'il permet d'obtenir des gains de poids de 30 % et plus par rapport aux roues en acier nécessite des cycles de fabrication assez complexes . En effet les deux demi-jantes sont obtenues à partir de disques plats troués formés par une opération de repoussage suivie d'une opération de rectification , ces demi-jantes sont ensuite assemblées par une soudure circonférentielle pour former la jante qui est enfin liée au voile par une autre soudure ou par une opération de boulonnage.La soudure reliant les deux demi-jantes peut être remplacée par un joint si les trois parties composant la roue , les deux demi-jantes et le moyeu d'un seul tenant avec le voile .sont assemblées par boulonnage.

Un autre procédé consiste à fabriquer des roues en trois parties à partir de deux demi-jantes obtenues par moulage ou matriçage comme le moyeu. Ce procédé n'offre aucun avantage particulier par rapport aux roues en deux parties et présente des inconvénients de prix de revient car la fabrication est plus longue.

Les caractéristiques les plus importantes que doivent présenter les roues des véhicules sont , après l'évidente solidité pour la sécurité un moment d'inertie limité une rapide déperdition de chaleur créée par l'utilisation du système de freinage souvent situé contre le moyeu de la roue ainsi que le respect des normes internationales définies par l'European Tyre And Rim Technical Organisation (ETRTO) définissant les cotes et les profils.

Il est également de notoriété publique que les roues de véhicules automobiles sont constituées de la jante ainsi que d'un moyeu et d'un voile plein ou ajouré le moyeu étant souvent d'un seul tenant avec le voile ou disque . Ces éléments peuvent être réalisés indépendamment les uns des autres et être assemblés ensuite ou bien intégrés totalement pour ne former qu'une seule pièce.

Afin de répondre le mieux possible aux impératifs techniques cités plus haut tels que la solidité et un moment d'inertie limité , la fabrication actuelle s'est orientée de préférence vers la production de roues en alliage léger à base d'alumunium , de, magnésium ou de titane.

Afin de répondre à un besoin d'interchangeabilité des jantes et des moyeux, on connait des roues en alliage léger comportant une jante en alliage léger composée de deux parties repoussées , technologie permettant éventuellement le boulonnage du voile à la jante avec un poids inférieur à celui des roues moulées ou matricées mais d'un prix de revient plus élevé que celui des roues moulées ou matricées et dont une des principales difficultés réside dans le respect des normes internationales ETRTO pour la jante repoussée tandis que les autres caractéristiques techniques sont supérieures à celles des roues moulées.

Afin d'éliminer ces inconvénients , la présente invention a pour but de réaliser un procédé de fabrication de roues en alliage léger constituées de trois parties réalisées séparément et assemblées ensuite : la jante en deux, parties et le moyeu d'un seul tenant avec le voile ou disque.

Un autre but de l'invention est de réaliser des roues en alliage léger en trois parties permettant l'assemblage d'une gamme étendue de jantes ayant des cotes différentes avec des moyeux d'un seul tenant avec le voile de telle façon que les prix de revient soient inférieurs par rapport à celui des roues en trois parties existantes pour lesquelles il faut prévoir un moule de repoussage ou une matrice spécifique pour chaque modèle de jante ou de moyeu.

Un autre but de l'invention est de réaliser des roues en alliage léger composées de trois parties conservant un avantage de poids sur les jantes moulées ou matricées et dont la jante comporte sur sa partie intérieure une couronne qui permet , par le calage du voile sur cette couronne de la jante dont le diamètre intérieur est plus petit que celui du voile , l'assemblage par une opération de boulonnage comme avec une jante réalisée avec des disques repoussés ou moulés ou matricés.

Un autre but de l'invention est de réaliser des roues en alliage léger composées de trois parties dont la jante en deux parties comporte sur sa partie intérieure une couronne circonférentielle qui permet soit le calage frontal du voile soit le calage dorsal du voile ce qui autorise des déports différents pour un même profil de jante .

Un autre but de l'invention est de réaliser des roues en alliage léger composées de trois parties dont les demies jantes comportent sur leur partie intérieurel au sommet de la couronne circonférentielle qui permet soit le calage frontal du voile soit le calage dorsal du voile, un évidement qui recevra un joint au boulonnage pour l'étanchéité.

Un autre but de l'invention est de réaliser des roues en alliage léger d'un poids total minimum grâce aux matériaux utilisés.

Un des buts de l'invention est de réaliser des jantes qui , pour des profils identiques , sont plus résistantes que celles des roues en trois parties existantes du fait de la technique de l'extrusion qui permet d'obtenir un alliage plus résistant que celui obtenu par repoussage et du dessin de la filière d'extrusion autorisant un profil de jante avec des épaisseurs différentes en fonction des impératifs techniques de résistance du matériau utilisé , cela permetttant de n'utiliser que la quantité de matière nécessaire.

Un autre but de l'invention est de réaliser des roues en trois parties en alliage léger qui respectent dès leur conception les cotes et les profils définis par les normes internationales ETRTO ce qui évite des opérations onéreuses de formage et de rectification

Ces buts sont atteints selon la présente invention par un procédé de fabrication de jantes en alliage léger caractérise par le fait que chaque jante est réalisée par l'assemblage de deux demi-jantes obtenues par roulage de profils extrudés de dimensions préfixées comportant chacun une aile avec un évidement à l'angle formé par l'aile avec la partie de la jante qui reçoit le pneumatique.Ces deux ailes , cote à cote, formeront une couronne circonférentielle intérieure et les profils roulés puis soudés longitudinalement tandis que le moyeu d'un seul tenant avec le voile est calé dans la circonférence intérieure de la jante , laquelle circonférence présente une couronne annulaire radiale de retenue, formée des deux ailes roulées, en direction du moyeu 1 faisant office d'épaulement pour le dos ou la face du voile , le moyeu d'un seul tenant avec le voile est bloqué sur la couronne circonférentielle au moyen de boulons et d'écrous en obtenant ainsi les avantages économiques dont on a parlé précédemment ainsi que les avantages techniques qui vont être décrits ci-après.

Les caractéristiques de l'invention ressortent plus clairement de la description qui va suivre.

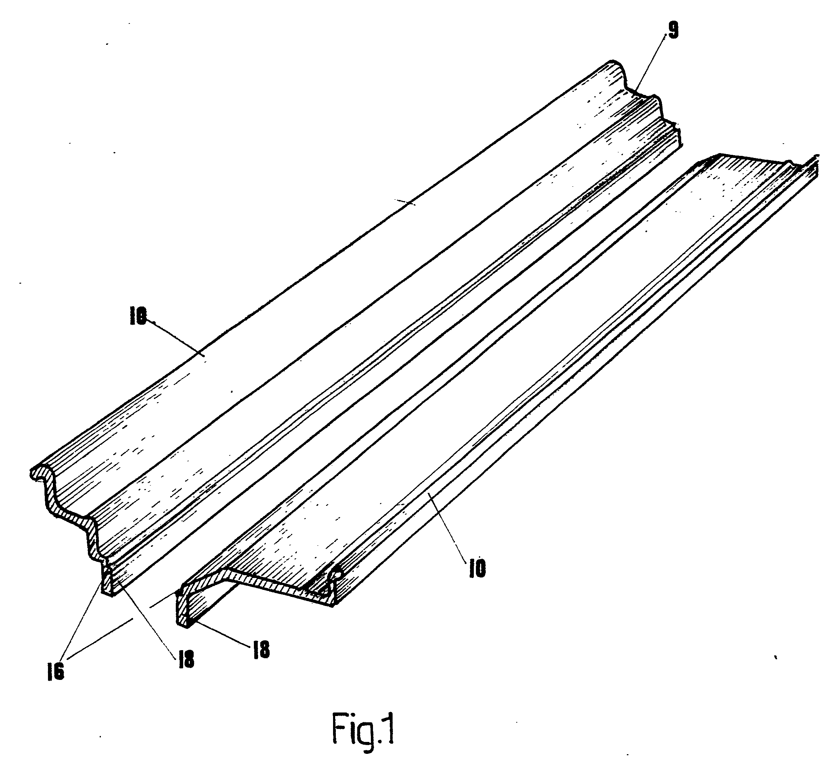

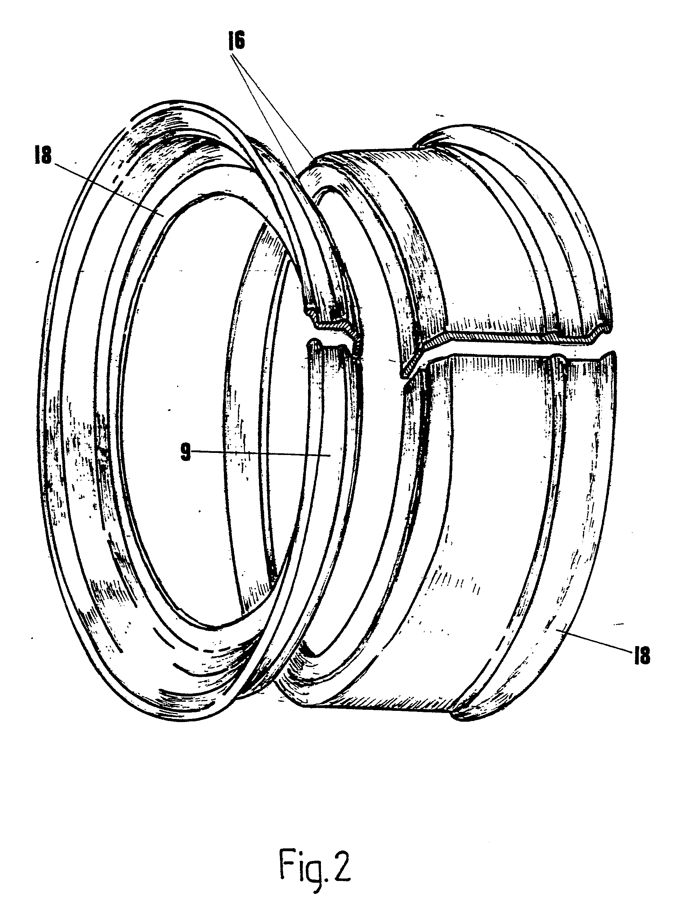

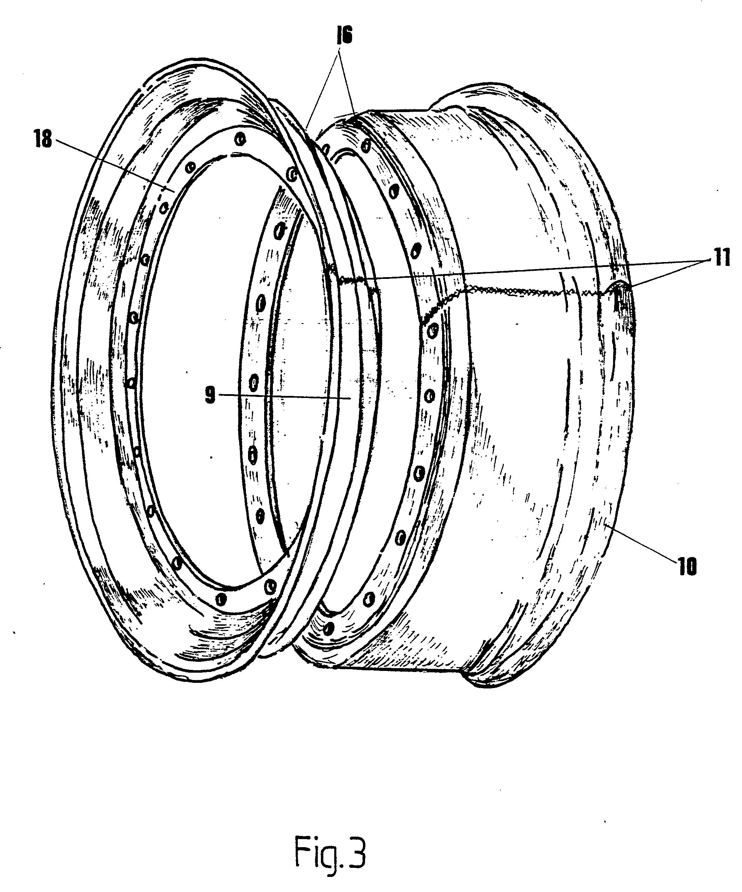

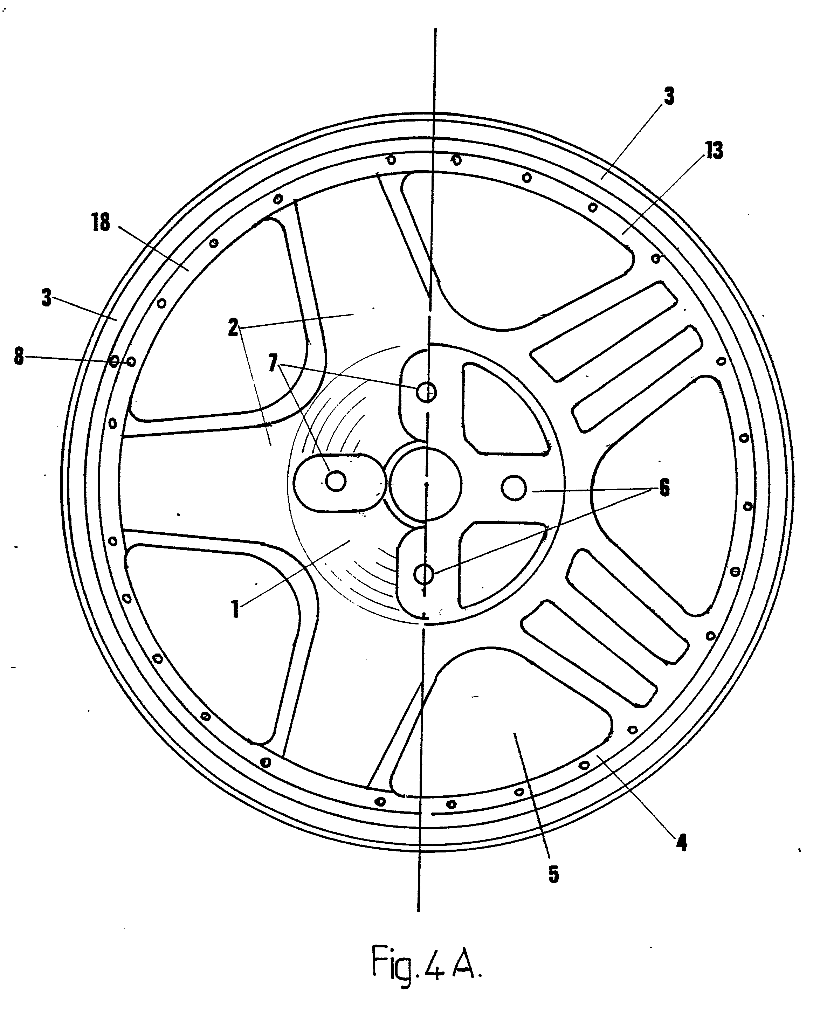

Conformément au procédé selon l'invention et dans le but de limiter les temps de fabrication et par conséquent de réduire le coût final des roues , les demi-jantes selon l'invention sont fabriquées à partir de segments droits extrudés à chaud avec des cotes correspondant à celles préconisées par l'ETRTO suivant un cycle de fabrication comprenant trois phases successives représentées par les figures 1 à 3 à savoir :

-figure 1 :découpage du tronçon linéaire -a- du profil en alliage léger obtenu par extrusion ,profil comportant une aile ( 18) située perpendiculairement au plan du profil et un évidement (16).

-figure 2 :roulage circonférentiel du segment droit extrudé pour lui donner la forme définitive de la demie jante et comportant une couronne circonférentielle radiale intérieure formée par l'aile roulée

-figure 3 :soudage des deux bords de jonction

Grâce au procédé selon l'invention , les phases du cycle de fabrication des demi-jantes peuvent être réduites par rapport à celles du cycle de fabrication de ces mêmes demi-jantes a partir de bandes de tôles et de celles du cycle de fabrication à partir d'un segment cylindrique extrudé du fait de la suppression des opérations de formage des gorges et bourrelets nécessaires à la rétention du pneumatique.

Ces phases de fabrication sont aussi plus courtes que celles nécessitées par l'élaboration de demi-jantes à partir de disque d'alliage repoussé.

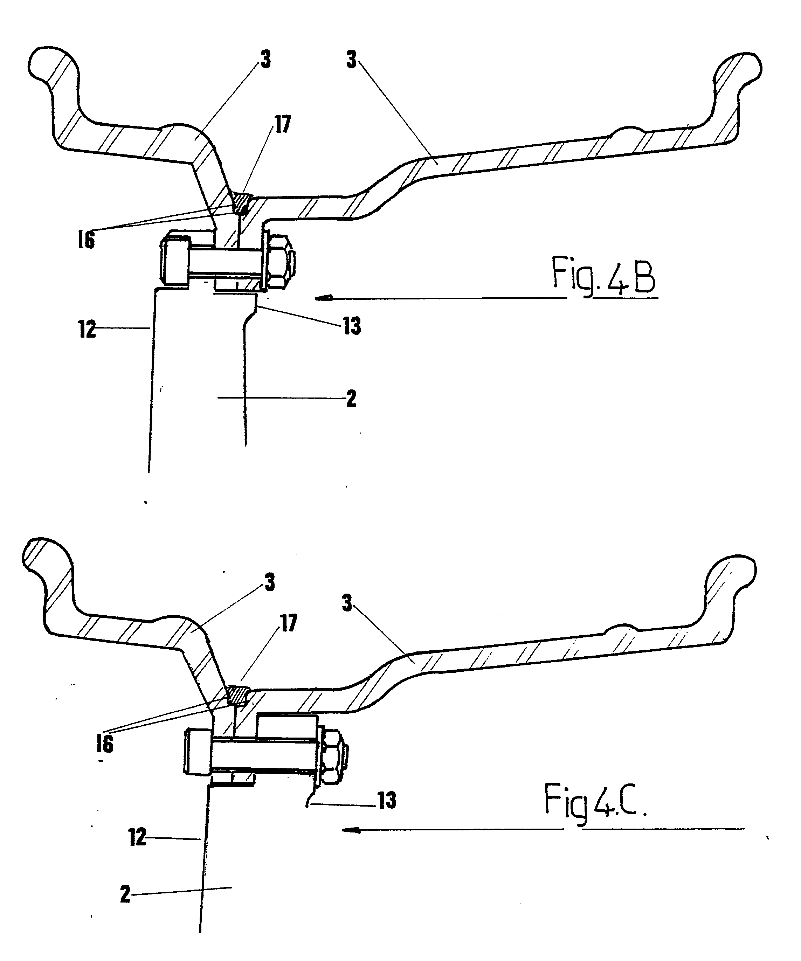

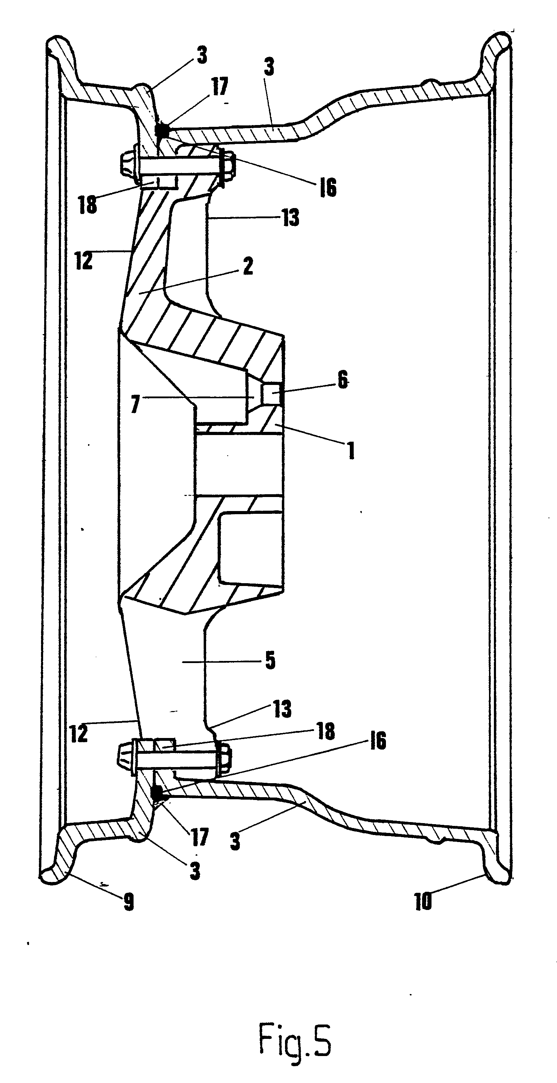

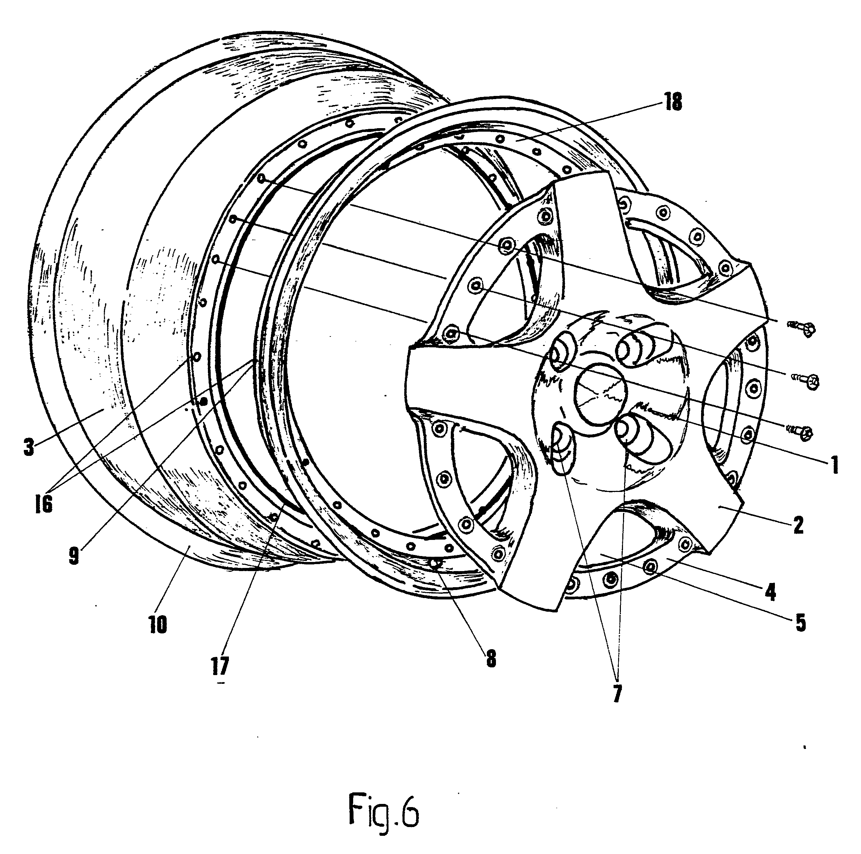

Les demi-jantes obtenues avec le procédé indiqué plus haut sont ensuite assemblées cote à cote et boulonnées , comme décrit ci-après en regard des figures 4a,4b,4c à des voiles moulés ou matricés à chaud , sur lesquelles la référence , désigne le moyeu d'un seul tenant avec le voile 2 voile qui est bloqué dans la jante 3, l'étanchéité étant assurée par un joint 17 situé entre les deux demies jantes et calé dans l'évidement 16.

Selon l'invention , la jante 3 ,issue de deux segments droits de profil extrudé aux cotes préfixées et comportant une aile , est pourvue d'une couronne intérieure radiale 18 s'étendant circonférentiellement vers l'axe de la roue .Cette couronne fait office d'épaulement d'arrêt contre lequel vient se bloquer le dos 13 ou la face 12 de la bande circonférentielle extérieure 4 du voile ou disque 2.

Le bord frontal ou dorsal de la bande annulaire circonférentielle extérieure 4 est relié à la jante 3 par l'installation de quinze à vingt cinq écrous et boulons,nombre qui peut varier en fonction des dimensions de la jante.

Sur les figures 4 a , 5 et 6 les lumières passantes du voile de l'exemple (qui pourrait avoir un profil et des cotes différentes de celui-ci) sont référencées 5 , tandis que les trous destinés a recevoir les goujons fixes du flasque de l'axe destiné à recevoir la roue ont pour référence 6 et que la référence 7 désigne les trous pour les boulons de fixation , le trou de valve est référencé a.

Avec la structure de roue qui vient d'être susdécrite , on obtient les avantages suivants :
-la déformation plastique de certains alliages légers (par exemple l'alliage d'aluminium) lors de l'opération d'arrondissement des segments linéaires extrudés provoque, par écrouissage du matériau, l'augmentation de la résistance du matériau aux sollicitations .
-la demi-jante 3 , avec son profil exact déterminé à l'origine par les filières d'extrusion et comportant une aile 18 n'a nécessité aucune opération de formation des profils et gorges contrairement à ce qui se produit pour les roues issues d'une bande linéaire plate ou d'un segment cylindrique extrudé et aucune opération mécanique de finition sinon pour l'élimination de l'excédent du cordon de soudage tout en respectant les normes européennes ETRTO ,contrairement à ce qui se produit pour les demi-jantes en tôle d'alliage léger repoussée.

-du fait de l'absence d'aspérités , l'utilisation éventuelle de pneumatique sans chambre à air .

-du fait du boulonnage du voile et des demi-jantes grâce à la couronne circonférentielle sur laquelle vient s'appuyer le bord frontal ou dorsal du voile , il est possible de changer seulement l'une ou l'autre des trois parties de la roue les demies jantes ou le moyeu d'un seul tenant avec le voile ,en cas de lésion survenue à cette partie ce qui est impossible avec des roues monolithiques ou avec des roues dont la jante et le moyeu sont soudés.

-la fabrication de la roue en trois parties permet aussi , avec un seul modèle de moyeu ( d'un seul tenant avec le voile) moulé ou matricé associé avec des demi-jantes de largeurs différentes ,le montage d'une gamme étendue de pneumatiques à moindre coût puisqu'une seule variation de filière d'extrusion est nécessaire .

-le blocage du voile sur sa partie dorsale ou sur sa partie frontale permet d'obtenir ,avec un même profil de jante ,des possibilités de déports à moindre cout du fait de l'utilisation des mêmes profils de demies jante issus des deux mêmes filières d'extrusion .

-le profil du segment droit extrudé permet , en fonction de sa longueur , de concevoir des jantes de diamètres différents ayant la même largeur à moindre cout , les deux mêmes filières d'extrusion étant utilisées pour ces demi-jantes de diamètres différents .

-le calage du joint dans un évidement prévu à cet effet permet une étanchéité plus grande.

-la caractéristique principale des roues obtenues par le procédé selon l'invention , réalisées en alliage léger est dans la diminution de poids de l'ordre de 30 % par rapport a des roues de dimensions identiques en acier et de 20 % par rapport aux roues identiques moulées ou matricées, avec des caractéristiques de résistance au moins égales , et ce avec une réduction du prix de revient par rapport aux autres roues en alliage léger en trois parties.

Ainsi la roue est constituée de trois éléments
-le moyeu 1 d'un seul tenant avec le voile 2 obtenu par moulage ou matriçage a chaud et bloqué dans la jante par boulonnage comme décrit précédemment .

-les deux demi-jantes 3 réalisées facilement et rapidement a l'aide d' une rouleuse et d'une soudeuse à partir de deux segments droits profilés extrudés en alliage léger comportant chacune une aile avec un évidement ailes qui , roulées , formeront une couronne circonférentielle intérieure sur laquelle viendra se caler le moyeu.

La description qui précède fait apparaître clairement les caractéristiques du procédé et des roues en alliage léger selon l'invention qui se caractérise par plusieurs avantages techniques et économiques .

**Revendications**

1 - Procédé pour la fabrication de roues en alliage léger caractérisé par le fait que chaque roue est formée de trois parties indépendantes assemblées l'une à l'autre deux demi-jantes obtenue à partir de segments droits découpés dans deux profils extrudés en alliage léger comportant chacun une aile roulés puis soudés au point de jonction des deux bords et un voile bloqué dans la jante ( formée par les deux demies jantes) dans le sens axial de celle-ci contre une couronne circonférentielle intérieure issue du roulage des ailes et boulonné pour lier les trois parties de la roue , l'étanchéité étant assurée par un joint situé entre les deux demi-jantes

2 - Roue en alliage léger en trois parties , notamment pour véhicules automobiles , obtenue par le procédé selon la revendication 1 .caractérisée par le fait qu'elle est composée de trois éléments , et plus précisément un moyeu (1)-d'un seul tenant avec le voile(2) ,plein ou ajouré, obtenu par moulage ou matriçage à chaud ,et deux demi-jantes ( 3) obtenues à partir de deux sections droites profilées extrudée dans lesquelles ledit voile est calé contre une couronne circonférentielle intérieure (18)et bloqué à l'aide de boulons ( 14) et d'écrous (15) sur la jante,l'étanchéité étant assurée par un joint (17)calé dans les évidements (16) de chaque demi-jante.

3 - Roues en alliage léger en trois parties selon la revendication 2 , caractérisées par le fait que les segments droits obtenus à partir d'un même profil extrudé comportant une aile permet d'obtenir des demi-jantes de diamètres différents en fonction de la longueur initiale de ces segments.

4 - Roues en alliage léger en crois parties selon la revendication 3 , caractérisées par le fait qu'indépendamment de sa largeur (L) , du profil de sa gorge destiné à recevoir le pneumatique et de l' évidement (16) destiné à recevoir le joint (37)- ,chaque demi-jante est dotée d'une couronne circonférentielle radiale intérieure (18) nécessaire au boulonnage obtenue par roulage d'une partie des profils lors de l'extrusion,l'aile (18) située dans un plan perpendiculaire au plan de la gorge devant recevoir le talon du pneumatique, a l'extrémité du profil opposée à celle de cette même gorge et du côté opposé à celui qui doit recevoir le pneumatique.

5 - Prodédé de fabrication de roues en alliage léger en trois parties ,notamment pour véhicules automobiles ,comprenant une jante et une partie calée dans celle-ci selon une quelconque des revendications précédentes caractérisé par le fait que chaque demi-jante ,obtenue à partir d'un segment linéaire découpé dans un profil extrudé en alliage léger comportant une aile avec des cotes préfixées est soumise a un cycle d'usinage comprenant les phases suivantes :

-découpage d'un segment linéaire dans un profil extrudé en alliage léger comportant une aile

-roulage circonférentiel de ce segment droit profilé

-soudage des deux bords de jonction pour fermer la demi-jante.

6 - Demies jantes en alliage léger obtenues par roulage d'un profil extrudé comportant une aile qui se trouve perpendiculaire au plan de la jante , du côté opposé à celui qui reçoit le pneu , à l'extrémité du profil, aile sur laquelle sera fixé le moyeu par boulonnage.

Fig.1

Fig. 2

Fig.3

Fig. 4 A.

Fig. 4B

Fig 4.C.

EP 0 404 708 A1

Fig.5

Fig.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | DE-A-2361066 (WERNER)<br>* page 2, lignes 5 - 19; figures 1-5 * | 1, 2, 5 | B60B25/22<br>B21D53/30 |
| A |  | 3, 4, 6 | B60B3/06 |
|  | --- |  |  |
| Y | FR-A-2332079 (HOLLAND MECHANICS)<br>* page 6, lignes 5 - 14 * |  |  |
|  | * page 12, lignes 29 - 33; figures 5, 7 * | 1, 2 |  |
|  | --- |  |  |
| Y | US-A-4185370 (EVANS)<br>* colonne 3, lignes 13 - 15; figure 2 * | 1, 5 |  |
|  | --- |  |  |
| A | FR-A-2582586 (SOC.2G,SARL)<br>* page 7, ligne 26 - page 9, ligne 31; figures 1-3 * | 1, 2, 3, 4, 6 |  |
|  | --- |  |  |
| A | US-A-3582141 (KELSEY)<br>* colonne 3, lignes 46 - 69; figures 1-5 * | 1, 2, 4, 5, 6 |  |
|  | ----- |  |  |

DOMAINES TECHNIQUES
RECHERCHES (Int. Cl.5 )

B60B
B21D

Le présent rapport a été établi pour toutes les revendications

| Lieu de la recherche | Date d'achèvement de la recherche | Examinateur |
|---|---|---|
| LA HAYE | 18 SEPTEMBRE 1990 | AYITER I. |